# EUROPÄISCHE PATENTANMELDUNG

(11) **EP 2 915 979 A1**
(43) Veröffentlichungstag der Anmeldung: **09.09.2015**
(21) Anmeldenummer: 14157881.5
(22) Anmeldetag: 05.03.2014
(51) Int. Cl.: F02C 7/22, F02C 9/26

(54) **Erweiterung des fahrbaren Wobbe-Bereiches für eine Gasturbine**

(71) Anmelder: Siemens Aktiengesellschaft, 80333 München (DE)
(72) Erfinder: Deuker, Eberhard, 45481 Mülheim an der Ruhr (DE); Seifer, Timo, 45966 Gladbeck (DE)

(57) **Zusammenfassung**

Die Erfindung betrifft eine Gasturbine (1) umfassend eine erste Brennkammer (4) mit einem ersten Brenner (5), welcher über eine Brennstoffzuleitung (11) mit Brennstoff (12) versorgt wird, einen Verdichter (6), der über eine Strömungsleitung (7) mit der ersten Brennkammer (4) fluidtechnisch verbunden ist, und eine Entspannungsturbine (8), die ebenfalls mit der ersten Brennkammer (4) fluidtechnisch verbunden ist, wobei die Brennstoffzuleitung (11) mit einer Luftzuleitung (13) derart fluidtechnisch verschaltet ist, dass dem Brennstoff (12) der Brennstoffzuleitung (11) Luft (14) über die Luftzuleitung (13) zugeführt werden kann, so dass ein Gemisch von Brennstoff (11) und Luft (14) der Gasturbine (1) über die Brennstoffzuleitung (11) zugeführt wird, oder zuführbar ist.

## Beschreibung

Die vorliegende Erfindung betrifft eine Gasturbine umfassend eine erste Brennkammer mit einem ersten Brenner, welcher über eine Brennstoffzuleitung mit Brennstoff versorgt wird, einen Verdichter, der über eine Strömungsleitung mit der ersten Brennkammer fluidtechnisch verbunden ist, und eine Entspannungsturbine, die ebenfalls mit der ersten Brennkammer fluidtechnisch verbunden ist. Darüber hinaus betrifft die Erfindung ein Verfahren zum Betreiben einer Gasturbine, insbesondere einer vorab wie auch nachfolgend dargestellten Gasturbine.

Betriebserfahrungen für Gasturbinen zeigen, dass bei zahlreichen Gasturbinen sowohl die Verbrennungsstabilität wie auch die Menge der bei Verbrennung erzeugten NOx-Emissionen mit der berechnungstechnischen Größe der Wobbezahl, sowie weiterer Parameter, wie etwa der Temperatur des Brennstoffes, in engem Zusammenhang stehen. Die Wobbezahl (in der Literatur auch Wobbeindex genannt) dient hierbei in erster Linie zur Charakterisierung der Qualität von gasförmigen Brennstoffen, die entsprechend der jeweiligen Zusammensetzung unterschiedlich ausfallen kann. Die Wobbezahl berechnet sich als korrigierter Heizwert (Brennwert) und wird rechnerisch gebildet aus dem Quotient des Heizwertes (Brennwertes) und der Wurzel des Dichteverhältnisses von Brennstoff und Luft. Die Einheit der Wobbezahl wird typischerweise angegeben in J/m³ bzw. kWh/m³ und entspricht der Einheit des Heiz- bzw. Brennwertes.

Die Wobbezahl dient vor Allem der Beurteilung der Austauschbarkeit von Brenngasen, da Brenngase bei gleicher Wobbezahl einen verhältnismäßig gleichen Düsendruck bzw. eine vergleichbare Wärmebelastung in einem Brenner einer Verbrennungsanlage aufweisen. Durch die Berücksichtigung der Dichte in der technischen Größe der Wobbezahl kann nicht nur dem Heizwert sondern auch dem Volumenstrom Rechnung getragen werden, der nötig ist, um eine vorbestimmte Energiemenge an einen Brenner zu liefern.

Um zudem auch dem Einflussfaktor einer variierenden Brennstofftemperatur in derartigen Betrachtungen zu berücksichtigen, kann darüber hinaus ein sog. Gasindex betrachtet werden, welcher sich aus dem Produkt von Wobbezahl und der Wurzel der relativen Temperaturänderung des Gases ergibt.

Um die Qualität von Brennstoffen für Gasturbinen zu beurteilen, vermag die Wobbezahl eine Einschätzung hinsichtlich der Eindringtiefe des Brennstoffes in den Luftstrom am Brenner der Gasturbine zu geben, wodurch auch die Verbrennungsstabilität maßgeblich mit beeinflusst wird. So ist etwa in zahlreichen Gasturbinentypen bei verhältnismäßig größeren Wobbezahlen die Verbrennungsstabilität besser, jedoch die Menge an NOx-Emissionen verhältnismäßig größer. Da die Menge der NOx-Emissionen durch gesetzliche Rahmenbedingungen mitunter stark beschränkt sind, muss der Betreiber einer Gasturbine zur Gewährleistung einer ausreichend stabilen Verbrennung die Gasturbine mit einem Brennstoff von geeigneter Wobbezahl betreiben. Berechnungen zeigen, dass der für eine Gasturbine geeignete (=fahrbare) Wobbezahl-Bereich umso kleiner ist, je höher die Verbrennungstemperaturen in der Brennkammer sind. Im Umkehrschluss bedeutet dies jedoch, dass eine Erweiterung des Wobbe-Bereiches nur durch eine Absenkung der Verbrennungstemperatur möglich ist, wodurch jedoch Leistungs- bzw. Wirkungsgradverluste bei Betrieb der Gasturbine in Kauf zu nehmen wären.

Da die betriebstechnischen Rahmenbedingungen zunehmend auch nach einer erhöhten Flexibilität bei Betrieb der Gasturbinen verlangen, stellt sich das technische Problem, eine geeignete Brennstoffzusammensetzung vorgeben zu können, um die Gasturbine flexibel betreiben zu können. Ferner ist es ein technisches Erfordernis, die Brennstoffzusammensetzung derart zu wählen, dass ein hinsichtlich der Verbrennung in einer Brennkammer stabiler und ein hinsichtlich Emissionen grenzwertkonformer Betrieb der Gasturbine möglich ist. Somit stellt es sich als technisches Erfordernis dar, eine geeignete Anpassung der Brennstoffbeschickung einer Gasturbine vorzunehmen, um sowohl die Flammstabilität bei Verbrennung wie auch die Einhaltung der Mengen an NOx-Emissionen nach entsprechenden Vorgaben gewährleisten zu können.

Diese der Erfindung zugrunde liegenden Aufgaben werden gelöst durch eine Gasturbine gemäß Anspruch 1 sowie durch ein Verfahren zum Betreiben einer Gasturbine gemäß Anspruch 10.

Insbesondere werden die der Erfindung zugrundeliegenden Aufgaben gelöst durch eine Gasturbine umfassend eine erste Brennkammer mit einem ersten Brenner, welcher über eine Brennstoffzuleitung mit Brennstoff versorgt wird, einen Verdichter, der über eine Strömungsleitung mit der ersten Brennkammer fluidtechnisch verbunden ist, und eine Entspannungsturbine, die ebenfalls mit der ersten Brennkammer fluidtechnisch verbunden ist, wobei die Brennstoffzuleitung mit einer Luftzuleitung derart fluidtechnisch verschaltet ist, dass dem Brennstoff der Brennstoffzuleitung Luft über die Luftzuleitung zugeführt werden kann, so dass ein Gemisch von Brennstoff und Luft der Gasturbine über die Brennstoffzuleitung zugeführt wird oder zuführbar ist.

Weiter werden die der Erfindung zugrundeliegenden Aufgaben gelöst durch ein Verfahren zum Betreiben einer Gasturbine, insbesondere einer vorab wie auch nachfolgend dargestellten Gasturbine, welches folgende Schritte aufweist:
- Zuführen von Luft über eine Luftzuleitung an eine Brennstoffzuleitung derart, dass ein Gemisch von Luft und Brennstoff einem ersten Brenner einer ersten Brennkammer über die Brennstoffzuleitung zugeführt wird.

An dieser Stelle ist darauf hinzuweisen, dass der erfindungsgemäße Brennstoff gasförmig ist. Typischerweise ist der Brennstoff Erdgas, kann aber bspw. auch durch Stadtgas oder Synthesegas ersetzt sein.

Weiter ist darauf hinzuweisen, dass die Brennstoffzuleitung typischerweise den Brennstoff unter Druck befördert, weshalb etwa bei Zuführung von Luft in die Brennstoffzuleitung die Luft mindestens auf ein Druckniveau erhöht werden muss, welches dem Druck des Brennstoffes in der Brennstoffzuleitung entspricht.

Luft kann im erfindungsgemäßen Sinne als Umgebungsluft verstanden werden. Jedoch ist es auch möglich, dass damit Verbrennungsluft im Sinne von Abgas verstanden wird. Umgebungsluft würde hierbei typischerweise aus der Umgebung entnommen, wobei Verbrennungsluft aus einem Abgaskanal einer Brennkammer entnommen werden kann. Ebenso kann der Begriff Luft in noch anderer Weise etwa allgemein als Prozessluft verstanden werden. Im erfindungsgemäßen Sinn kann also Luft auch als ein Gas verstanden werden, welches einen Luftanteil aufweist, bzw. sich durch Verbrennung eines Luftanteils ableitet.

Die Mischung von Luft und Brennstoff erfolgt erfindungsgemäß in der Brennstoffzuleitung, oder aber in einem separaten Mischbereich, welcher mit der Brennstoffzuleitung fluidtechnisch verschaltet ist.

Bevorzugt handelt es sich bei der vorliegenden Gasturbine um eine stationäre Gasturbine, die in bspw. einem Kraftwerksumfeld eingesetzt wird.

Erfindungsgemäß ist vorgesehen, dem Brenner der Gasturbinen keinen reinen Brennstoff über die Brennstoffzuleitung zuzuführen, sondern einen Brennstoff, welcher mit Luft in einem bspw. vorbestimmten Verhältnis gemischt ist. Die Zumischung von Brennstoff kann hierbei geregelt oder gesteuert erfolgen, so dass auch der Gasturbinenbetrieb flexibilisiert werden kann. Durch die Zumischung eines Luftanteils in den Brennstoff kann folglich die Wobbezahl, bzw. der weiter oben erwähnte Gasindex, der effektiv am Brenner ansteht, abgesenkt werden. Dadurch kann der Brenner in einem günstigen Wobbezahl-Bereich betrieben werden, so dass einerseits eine ausreichende Flammenstabilität vorhanden ist, und andererseits der Betrieb der Gasturbine in einem geeigneten und erlaubten Bereich hinsichtlich der Menge der freigesetzten NOx-Emissionen vorgenommen werden kann. Insbesondere kann die Gasturbine durch eine Variation der Menge an zugemischter Luft in den Brennstoff über einen größeren Wobbezahl-Bereich betrieben werden, so dass eine erhöhte Flexibilisierung beim Betrieb der Gasturbine möglich wird. Infolgedessen kann bei auch abgesenkter Wobbezahl des Brennstoffes sowohl die Flammstabilität gewährleistet werden als auch die Einhaltung von Grenzwerten für die NOx-Emissionen.

Gemäß einer ersten besonders bevorzugten Ausführungsform der Erfindung ist vorgesehen, dass weiter eine Druckerhöhungseinheit umfasst ist, welche das Druckniveau der Luft erhöht, welches Druckniveau insbesondere mindestens dem Druckniveau des Brennstoffes in der Brennstoffzuleitung entspricht. Insbesondere ist die Druckerhöhungseinheit in die Luftzuleitung fluidtechnisch geschaltet, so dass die Luft in der Luftzuleitung hinsichtlich ihres Druckniveaus angepasst werden kann. Durch die Druckerhöhung der Luft auf ein geeignetes Druckniveau, kann gewährleistet werden, dass kein Brennstoff aus der Brennstoffzuleitung in die Luftzuleitung zurückströmt. Durch Wahl eines geeigneten Druckniveaus der Luft kann auch die Menge an in den Brennstoff gemischter Luft geeignet eingestellt werden. Insofern kann über das relative Druckverhältnis von Luft und Brennstoff ein geeignetes Mischungsverhältnis beider eingestellt werden. Die Druckerhöhungseinheit kann hierzu variabel hinsichtlich der Druckerhöhung ausgebildet sein.

Gemäß einer weiteren besonders bevorzugten Ausführungsform der Erfindung ist vorgesehen, dass die Druckerhöhungseinheit mittels des Brennstoffes in der Brennstoffzuleitung betrieben wird. Ein Betrieb mittels des Brennstoffs kann insbesondere als eine Energetisierung ausgeführt sein, welche etwa dadurch erfolgt, dass der unter Druck stehende Brennstoff in der Brennstoffzuleitung über eine strömungstechnische Antriebsvorrichtung entspannt wird und die Entspannungsarbeit einer Druckerhöhung der Luft in der Luftzuleitung erreicht.

Zum Betrieb bzw. zur Energetisierung kann zudem bspw. ein Teilstrom des Brennstoffstroms abgezweigt werden, um damit etwa die Druckerhöhungseinheit anzutreiben. Dieser Antrieb kann wiederum ein strömungstechnischer Antrieb sein, aber auch ein verbrennungstechnischer. Ausführungsgemäß wird dem Brennstoff in der Brennstoffzuleitung also Energie entnommen, die zur Druckerhöhung der Luft dient. Damit ist es nicht erforderlich, die Druckerhöhungseinheit mittels weiterer externer Energiequellen zu betrieben. Vielmehr kann die Gasturbine weitgehend autark und in energetisch vorteilhafterweise die Druckerhöhungseinheit betreiben. In anderen Worten wird also dem in der Brennstoffzuleitung geführten Brennstoff teilweise Energie entnommen, um damit die Druckerhöhungseinheit zu betreiben bzw. zu energetisieren.

Gemäß einer bevorzugten Ausführungsform der Erfindung ist vorgesehen, dass die Druckerhöhungseinheit als Strahlpumpe ausgebildet ist. Eine Strahlpumpe vermag den Betrieb etwa eines externen Kompressors zu vermeiden, um das Druckniveau der Luft entsprechend anzuheben. Ausführungsgemäß wird also vorgeschlagen, die Druckenergie des Brennstoffes so weit zu nutzen, um damit die Luft mittels der Strahlpumpe auf einen erforderlichen Druck zu bringen, um diese mit dem Brennstoff vermischen zu können. Da typischerweise der Volumenstrom von Brennstoff im Vergleich zu in der Strahlpumpe zugemischter Luft deutlich größer ist, ist mit einem nur unwesentlichen Druckabfall in der Brennstoffzuleitung nach Zumischung von Luft in den Brennstoff in der Strahlpumpe zu rechnen. Erste grobe Abschätzungen der Anmelderin haben ergeben, dass etwa eine Beimischung von 1 kg Luft zu 14 kg Methan mittels einer Strahlpumpe eine Verminderung der Wobbezahl um etwa 4 % erreicht. Gleichzeitig würde bei einer derartigen Zumischung der Sauerstoffgehalt in dem gemischten Gas um ca. 0,6 mol-% ansteigen, wodurch jedoch nicht die Grenzwerte für Sauerstoff in dem Brennstoff überschritten würden.

Alternativ zu dieser Ausführungsform ist es auch möglich, die Druckerhöhungseinheit als Turbolader auszubilden. Ein typischer Turbolader weist hierbei einen Turboladerverdichter, sowie eine Turboladerturbine auf, die für den Antrieb des Turboladerverdichters vorgesehen ist. Bevorzugt wird die Turboladerturbine mit Brennstoff aus der Brennstoffzuleitung beschickt und energetisiert, so dass der Turboladerverdichter zur Erhöhung des Druckniveaus der Luft in der Luftzuleitung ausgebildet ist. Dies würde eine besonders energetisch vorteilhafte Betriebsweise des Turboladers erreichen. Durch den Betrieb des Turboladers kann also eine Verdichtung der Luft auf ein Druckniveau erreicht werden, welches mindestens dem Druckniveau des Brennstoffes in der Brennstoffleitung entspricht. Wird der Turbolader zudem noch durch den Brennstoffstrom in der Brennstoffzuleitung betrieben, kann die Energie für den Betrieb des Turboladers vorteilhaft aus dem Brennstoffstrom entnommen werden. Da der Brennstoffmassenstrom zudem deutlich größer ist als der beizumischende Luftstrom, kann ein geringer Druckverlust auf der Seite des Brennstoffstroms bereits die erforderliche Verdichterleistung bereitstellen. Quantitative Abschätzungen hierzu haben wiederum ergeben, dass etwa eine Beimischung von 1,66 kg Luft zu 14 kg Methan als Brennstoff eine Verminderung der Wobbezahl um etwa 8 % erreicht. Diese Luftmenge führt wiederum zu einer Erhöhung von etwa 1 mol-% an Sauerstoff in dem gemischten Gas. Auch diese Menge an Sauerstoff in dem gemischten Brennstoffgas entspricht einer Größenordnung, welche etwa bei anderen synthetischen Brennstoffen, (Synthesegas bzw. Stadtgas) bereits als akzeptabel eingestuft wurden und insofern keine weiteren Probleme verursachen.

Entsprechend einer weiteren besonders bevorzugten Ausführungsform der Erfindung ist vorgesehen, dass die Luft in der Luftzuleitung Verdichterendluft ist. Ausführungsgemäß ist also die Luft auf dem Verdichterenddruck des Verdichters der Gasturbine und wird somit bspw. aus dem Verdichterende bzw. aus der Strömungsleitung zur Verbindung von Verdichter und Brennkammer entnommen. Der Verdichterenddruck beträgt typischerweise etwa 18 bar, so dass bei Entnahme von Luft auf diesem Druckniveau nur noch eine geringe Druckerhöhung erforderlich ist, um die Luft dem Brennstoff in der Brennstoffzuleitung zumischen zu können. Der in der Brennstoffzuleitung geführte Brennstoff weist typischerweise ca. 29 bar auf, so dass der Unterschiedsbetrag von 11 bar etwa durch die Druckerhöhungseinheit aufgebracht werden muss. Dieser geringe Druckunterschied erfordert jedoch nur eine verhältnismäßig geringere Verdichtungsleistung, so dass die Druckerhöhungseinheit besonders energieeffizient betrieben werden kann. Die Versorgung der Luftzuleitung mit Luft aus dem Verdichterende, bzw. der Strömungsleitung eignet sich sowohl für den Betrieb der Druckerhöhungseinheit als Strahlpumpe wie auch als Turbolader.

Ebenso ist es denkbar, dass die Luft in der Luftzuleitung Verdichterluft ist. Demgemäß wird die Luft bevorzugt über eine Anzapfleitung aus dem Verdichter der Gasturbine entnommen, wobei das Druckniveau der Luft in der Luftzuleitung bereits deutlich über das Umgebungsdruckniveau erhöht ist. Auch in dieser Ausführungsform ist lediglich eine begrenzte Druckerhöhung der Luft in der Luftzuleitung erforderlich, um diese auf ein Druckniveau anzuheben, welches wenigstens dem des Brennstoffes in der Brennstoffzuleitung entspricht. Weiter kann es sich als vorteilig erweisen, wenn bspw. Verdichterluft bei einem Druckniveau von deutlich weniger als dem Verdichterenddruck entnommen wird, da diese Luft in dem Verdichter der Gasturbine noch nicht vollständig verdichtet wurde, und damit die vollständige Verdichtungsleistung abgefragt hat.

Gemäß einer weiteren besonders bevorzugten Ausführungsform der Erfindung ist vorgesehen, dass ein Wärmetauscher umfasst ist, welcher primärseitig in die Luftzuleitung geschaltet ist und sekundärseitig in die Brennstoffzuleitung, insbesondere an einem Ort stromaufwärts der Druckerhöhungseinheit. Demzufolge, kann Wärmeenergie aus der Luft in der Luftzuleitung auf den Brennstoff in der Brennstoffzuleitung übertragen werden, wodurch der Energieinhalt des Brennstoffes zunimmt. Insbesondere, wenn die Luft aus dem Verdichter der Gasturbine entnommen wurde, weist diese eine deutlich über der Umgebungstemperatur liegende Temperatur auf. Diese Wärmeenergie kann dem Brennstoff zugeführt werden, so dass dieser mehr Energie aufweist. Insbesondere bei einer Ausführungsform, bei welcher eine als Turbolader ausgebildete Druckerhöhungseinheit vorgesehen ist, kann dieser dem Brennstoff zusätzlich zugeführte Energieinhalt zum Antrieb des Turboladers bzw. zur Energetisierung des Turboladers genutzt werden. Damit kann die Druckerhöhungseinheit besonders energieeffizient betrieben werden.

Gemäß einer weiteren besonders bevorzugten Ausführungsform der Erfindung ist vorgesehen, dass weiterhin eine zweite Brennkammer mit einem zweiten Brenner umfasst ist, wobei die zweite Brennkammer und der zweite Brenner in die Luftzuleitung fluidtechnisch geschaltet sind. Bei Betrieb der zweiten Brennkammer kann also die Luft in der Luftzuleitung mit einem weiter nicht bezeichneten Brennstoff, welcher ebenfalls der zweiten Brennkammer zugeführt werden kann, verbrannt werden, um dadurch bspw. den Sauerstoffanteil in dem Abgas zu vermindern bzw. um die dabei freigesetzte thermische Energie nachfolgend nutzen zu können. Eine thermische Nutzung dieser freigesetzten thermischen Energie kann bspw. mithilfe des weiter oben beschriebenen Wärmetauschers erfolgen. Ausführungsgemäß ist vorgesehen, dass die Luft nach Verbrennung in der zweiten Brennkammer als Verbrennungsluft weiter zur Zuführung an die Brennstoffzuleitung und zur Mischung mit dem darin geführten Brennstoff vorgesehen ist. Weiterhin erweist es sich als vorteilhaft, dass durch die Erhöhung der Temperatur des Luft-/Brennstoff-Gemisches eine Absenkung des Gasindexes erfolgen kann. Insbesondere bei Gasturbinen, bei welchen der Brenner Gase auch bei verhältnismäßig höheren Gastemperaturen aufnehmen kann, eignet sich diese Ausführungsform besonders.

Gemäß einer ersten bevorzugten Ausführungsform des erfindungsgemäßen Verfahrens ist vorgesehen, dass weiterhin ein folgender Schritt umfasst ist:
- Erhöhung des Druckniveaus der Luft mittels einer Druckerhöhungseinheit auf ein Druckniveau, welches mindestens dem Druckniveau des Brennstoffes in der Brennstoffzuleitung entspricht.

Nachfolgend soll die Erfindung im Detail anhand einzelner Figuren beschrieben werden. Hierbei ist darauf hinzuweisen, dass die dargestellten Figuren lediglich schematisch zu verstehen sind, und keine Einschränkung hinsichtlich der Ausführbarkeit bedeuten.

Die in den Figuren mit gleichen Bezugszeichen versehenen technischen Merkmale weisen gleiche technische Wirkungen auf.

Ebenso sei darauf hingewiesen, dass die nachfolgenden technischen Merkmale in beliebiger Kombination miteinander beansprucht werden, soweit die Kombination die der Erfindung zugrundeliegenden Aufgaben lösen können.

Hierbei zeigen:
- Figur 1: eine graphische Darstellung der Abhängigkeit der fahrbaren Wobbezahlen (W) bei unterschiedlichen Verbrennungstemperaturen (T) in einer Gasturbine;
- Figur 2: eine erste Ausführungsform der erfindungsgemäßen Gasturbine in schematischer Schaltansicht;
- Figur 3: eine weitere Ausführungsform der Erfindung in schematischer Schaltansicht;
- Figur 4: eine weitere Ausführungsform in der Erfindung in schematischer Schaltansicht.

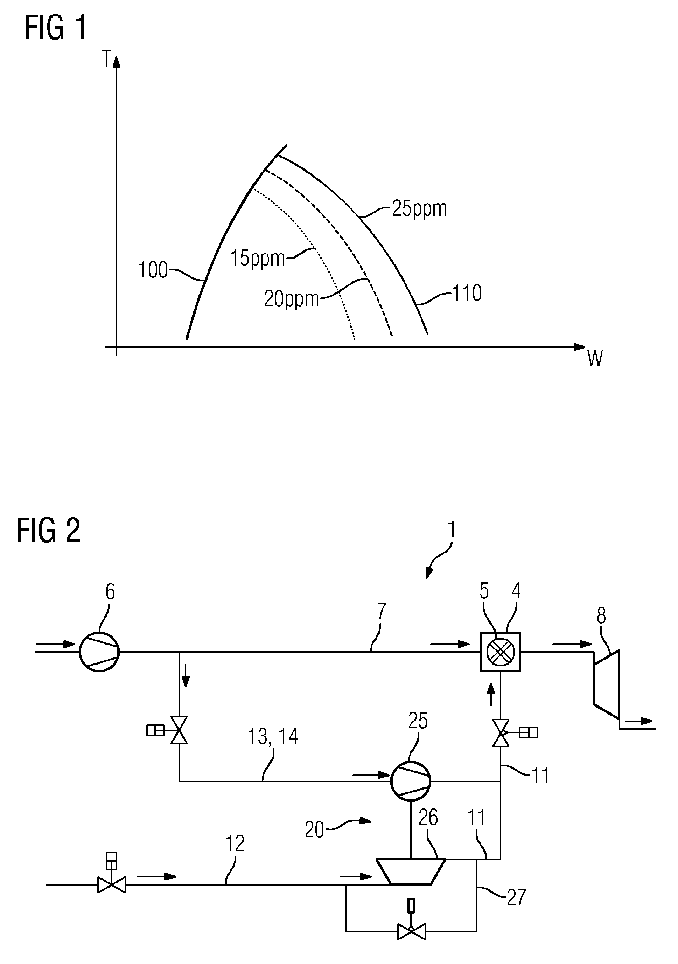

Figur 1 zeigt die Abhängigkeit der fahrbaren Wobbezahlen W bei unterschiedlichen Verbrennungstemperaturen T in einer Gasturbine. Hierzu weist das Diagramm Grenzbereiche auf, um den für den Betrieb einer Gasturbine erlaubten Wobbezahl-Bereich W feststellen zu können. Die Grenzbereiche betreffen die Flammenstabilitätsgrenze 100 zu kleineren Wobbezahlen W hin sowie auch die NOx-Grenzen 110 zu größeren Wobbezahlen W hin. Vorliegend wurden drei NOx-Grenzen 110 diagrammatisch dargestellt, welche mit NOx-Mengen von 15 ppm, 20 ppm und 25 ppm korrespondieren. Der bei Erreichen einer vorgegebenen Verbrennungstemperatur T fahrbare Wobbezahl-Bereich des Brennstoffes, welcher über die Brennstoffzuleitung dem Brenner einer Gasturbine zugeleitet wird, ergibt sich folglich als horizontale Strecke zwischen der Flammstabilitätsgrenze 100 und einer zutreffenden NOx-Grenze 110.

Leicht nachzuvollziehen ist es, dass bei verhältnismäßig geringeren Verbrennungstemperaturen T ein größerer Wobbezahl-Bereich fahrbar ist, um gleichzeitig ausreichende Flammstabilität wie auch die Einhaltung von NOx-Grenzwerten gewährleisten zu können. Es ist vorteilhaft, die Wobbezahl eines Brennstoffes durch die Zumischung von Luft insbesondere bei an den NOx-Grenzen 110 liegenden Betriebsbedingungen abzusenken, um damit eine stärkere Flexibilisierung des Betriebs erreichen zu können. Damit kann eine Verminderung der Verbrennungstemperatur T, die zu einer Leistungseinbuße bei Betrieb der Gasturbine führen würde, etwa vermieden werden.

Figur 2 zeigt eine erste Ausführungsform der erfindungsgemäßen Gasturbine 1 in schematischer Schaltansicht. Hierbei umfasst die Gasturbine 1 einen Verdichter 6, welcher über eine Strömungsleitung 7 mit einer ersten Brennkammer 4 sowie dem ersten Brenner 5 fluidtechnisch verschaltet ist. Ausführungsgemäß wird aus der Strömungsleitung 7 ein Teil der Verdichterendluft über eine Luftzuleitung 13 abgezweigt, um die darin geführte Luft 14 einer Druckerhöhungseinheit 20 zuzuführen. Die Druckerhöhungseinheit 20 ist hierbei als Turbolader ausgebildet, welcher einen Turboladerverdichter 25 sowie eine Turboladerturbine 26 aufweist. Durch weitere Verdichtung der Luft 14 mittels des Turboladerverdichters 25 kann die Luft in der Luftzuleitung 14 auf ein Druckniveau angehoben werden, welches wenigstens dem Druckniveau des Brennstoffes 12 in der Brennstoffzuleitung 11 entspricht. Der Brennstoff 12 wird zur Energetisierung des Turboladers 20 zunächst diesem zugeführt, um durch einen gezielten Druckabbau des unter Druck stehenden Brennstoffes 12 die Turboladerturbine 26 anzutreiben.

Der aus der Turboladerturbine 26 austretende Brennstoff 12 wird weiter in der Brennstoffzuleitung 11 dem ersten Brenner 5 über die Brennstoffzuleitung zugeführt. Kurz vor Erreichen des ersten Brenners 5 mündet die Luftzuleitung 13 in die Brennstoffzuleitung 11, so dass sich die durch den Turboladerverdichter 25 verdichtete Luft 14 mit dem Brennstoff 12 in der Brennstoffzuleitung 11 mischen. Durch die Gasmischung kann folglich der Wobbezahl-Bereich des Brennstoffes 12 abgesenkt werden. Das Gemisch aus Brennstoff 12 und Luft 14 wird folglich über die Brennstoffzuleitung dem ersten Brenner 5 zugeführt. Nach erfolgter Verbrennung dieses Gemisches in der ersten Brennkammer 4 tritt das Abgas aus der Brennkammer 4 aus und wird einer Entspannungsturbine 8 zugeführt.

Soll die Gasturbine 1 bspw. in einem Bereich betrieben werden, bei welchem eine Absenkung der Wobbezahl W des Brennstoffes 12 nicht erforderlich ist, kann etwa über einen Bypass 27 die Druckerhöhungseinheit durch den Brennstoff 12 umgangen werden.

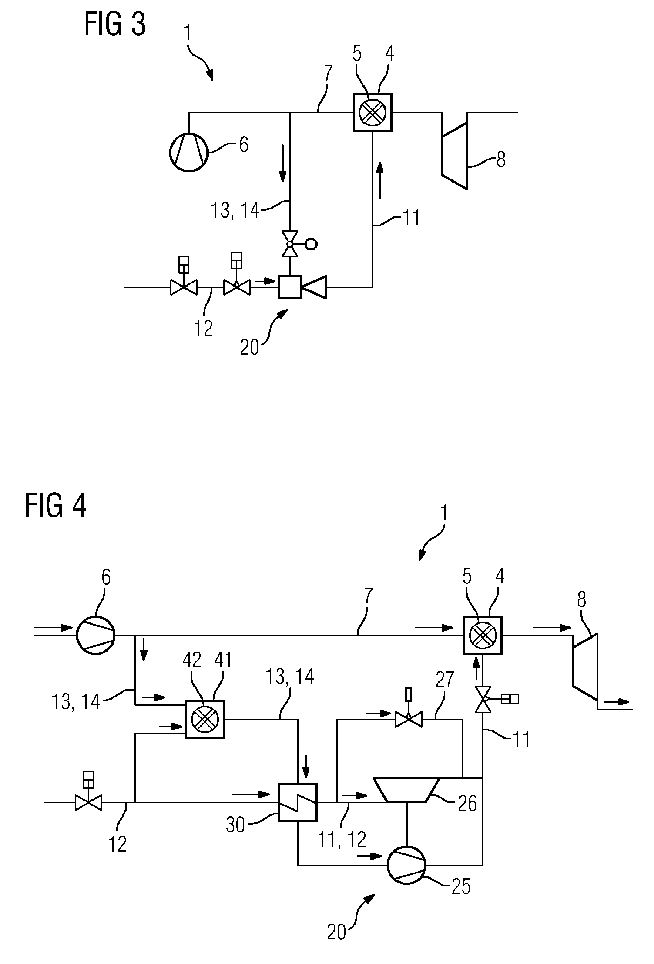

Figur 3 zeigt eine weitere Ausführungsform der erfindungsgemäßen Gasturbine 1, wobei die Druckerhöhungseinheit 20 nun als Strahlpumpe ausgebildet ist. Die Strahlpumpe ist einerseits mit der Brennstoffzuleitung 11 fluidtechnisch verschaltet, so dass etwa reiner Brennstoff 12 als Treibstrahl dienen kann. Über die ebenfalls mit der Strahlpumpe 20 verschaltete Luftzuleitung 13 kann Luft 14 der Strahlpumpe 20 zugeführt werden, die infolge des Betriebs der Strahlpumpe 20 sich mit dem Brennstoff 12 vermischt und gleichzeitig auf ein höheres Druckniveau angehoben wird. Das Gemisch der beiden Stoffe wird anschließend über eine Brennstoffzuleitung 11 dem ersten Brenner 5 der ersten Brennkammer 4 zugeführt. Da ausführungsgemäß die Luftzuleitung 13 Verdichterendluft aus der Strömungsleitung 7 entnimmt, ist der Druckunterschied zwischen der in der Luftzuleitung 13 geführten Luft 14 und dem in der Brennstoffzuleitung 11 geführten Brennstoff 12 lediglich gering, so dass durch die Strahlpumpe 20 nur dieser geringe Druckunterschiedsbetrag ausgeglichen werden muss. Aufgrund des deutlich höheren Volumenstroms an Brennstoff 12 in der Strahlpumpe ist auch nach erfolgter Mischung von Luft 14 und Brennstoff 12 in der Brennstoffzuleitung 11 mit keinem wesentlichen Druckabfall zu rechnen.

Figur 4 zeigt eine weitere Ausführungsform der erfindungsgemäßen Gasturbine 1 in schematischer Schaltansicht. Zusätzlich zu der in Figur 2 gezeigten Ausführungsform ist vorliegend eine weitere zweite Brennkammer 41 mit einem zweiten Brenner 42 vorgesehen, wobei die zweite Brennkammer 41 und der zweite Brenner 42 in die Luftzuleitung 13 fluidtechnisch verschaltet sind. Infolgedessen kann die aus der Strömungsleitung 7 entnommene Luft in einem ersten Verbrennungsvorgang verbrannt werden, um damit einerseits die Sauerstoffkonzentration in der Verbrennungsluft zu vermindern und gleichzeitig Wärme bereitstellen zu können. Der zweite Brenner 42 wird vorliegend mit Brennstoff 12 über eine nicht weiter mit Bezugszeichen versehene Abzweigleitung aus der Brennstoffzuleitung 11 versorgt. Der weitere nicht abgezweigte Brennstoff 12 wird sekundärseitig einem Wärmetauscher 30 zugeführt, der primärseitig mit der Verbrennungsluft aus der zweiten Brennkammer 41 beschickt wird. Demgemäß kann die der Luft 14 (Verbrennungsluft) innewohnende Wärme über den Wärmetauscher 30 an den Brennstoff 12 übertragen werden. Der so thermisch konditionierte Brennstoff 12 wird weiter an eine Turboladerturbine 26 geführt, um diese anzutreiben. Aufgrund der Temperaturerhöhung in dem Wärmetauscher 30 kann so ein besonders effizienter Betrieb der Druckerhöhungseinheit 20 erfolgen, da der aufgenommene Wärmebetrag wenigstens zum Teil zum Antrieb der Turboladerturbine 26 aufgewendet werden kann.

Weitere Ausführungsformen ergeben sich aus den Unteransprüchen.

## Patentansprüche

1. Gasturbine (1) umfassend eine erste Brennkammer (4) mit einem ersten Brenner (5), welcher über eine Brennstoffzuleitung (11) mit Brennstoff (12) versorgt wird, einen Verdichter (6), der über eine Strömungsleitung (7) mit der ersten Brennkammer (4) fluidtechnisch verbunden ist, und eine Entspannungsturbine (8), die ebenfalls mit der ersten Brennkammer (4) fluidtechnisch verbunden ist,
**dadurch gekennzeichnet, dass**
die Brennstoffzuleitung (11) mit einer Luftzuleitung (13) derart fluidtechnisch verschaltet ist, dass dem Brennstoff (12) der Brennstoffzuleitung (11) Luft (14) über die Luftzuleitung (13) zugeführt werden kann, so dass ein Gemisch von Brennstoff (11) und Luft (14) der Gasturbine (1) über die Brennstoffzuleitung (11) zugeführt wird, oder zuführbar ist.

2. Gasturbine nach Anspruch 1,
**dadurch gekennzeichnet, dass**
weiter eine Druckerhöhungseinheit (20) umfasst ist, welche das Druckniveau der Luft (14) erhöht, welches Druckniveau insbesondere mindestens dem Druckniveau des Brennstoffes (12) in der Brennstoffzuleitung (11) entspricht.

3. Gasturbine nach einem der Ansprüche 1 oder 2,
**dadurch gekennzeichnet, dass**
die Druckerhöhungseinheit (20) mittels dem Brennstoff in der Brennstoffzuleitung (11) betrieben wird.

4. Gasturbine nach einem der vorhergehenden Ansprüche 2 oder 3,
**dadurch gekennzeichnet, dass**
die Druckerhöhungseinheit (20) als Strahlpumpe ausgebildet ist.

5. Gasturbine nach einem der vorhergehenden Ansprüche 2 oder 3,
**dadurch gekennzeichnet, dass**
die Druckerhöhungseinheit (20) als Turbolader ausgebildet ist.

6. Gasturbine nach einem der vorhergehenden Ansprüche,
**dadurch gekennzeichnet, dass**
die Luft (14) in der Luftzuleitung (13) Verdichterendluft ist.

7. Gasturbine nach einem der vorhergehenden Ansprüche,
**dadurch gekennzeichnet, dass**
die Luft (14) in der Luftzuleitung (13) Verdichterluft ist.

8. Gasturbine nach einem der vorhergehenden Ansprüche,
**dadurch gekennzeichnet, dass**
weiter ein Wärmetauscher (30) umfasst ist, welcher primärseitig in die Luftzuleitung (13) geschaltet ist, und sekundärseitig in die Brennstoffzuleitung (11) insbesondere an einem Ort stromaufwärts der Druckerhöhungseinheit (20).

9. Gasturbine nach einem der vorhergehenden Ansprüche,
**dadurch gekennzeichnet, dass**
weiter eine zweite Brennkammer (41) mit einem zweiten Brenner (42) umfasst ist, wobei die zweite Brennkammer (41) und der zweite Brenner (42) in die Luftzuleitung (13) fluidtechnisch geschaltet sind.

10. Verfahren zum Betreiben einer Gasturbine (1), insbesondere einer Gasturbine (1) nach einem der vorhergehenden Ansprüche, welches folgende Schritte aufweist:
- Zuführen von Luft (14) über eine Luftzuleitung (13) an eine Brennstoffzuleitung (11) derart, dass ein Gemisch von Luft (14) und Brennstoff (12) einem ersten Brenner (5) einer ersten Brennkammer (4) über die Brennstoffzuleitung (11) zugeführt wird.

11. Verfahren nach Anspruch 10,
**dadurch gekennzeichnet, dass**
weiterhin folgender Schritt umfasst ist:
- Erhöhung des Druckniveaus der Luft (14) mittels einer Druckerhöhungseinheit (20) auf ein Druckniveau, welches mindestens dem Druckniveau des Brennstoffes (12) in der Brennstoffzuleitung (11) entspricht.
